(19) Europäisches Patentamt / European Patent Office / Office européen des brevets

(11) **EP 3 155 287 B1**

(12) **EUROPÄISCHE PATENTSCHRIFT**

(45) Veröffentlichungstag und Bekanntmachung des Hinweises auf die Patenterteilung:
**09.09.2020   Patentblatt 2020/37**

(21) Anmeldenummer: **15717847.6**

(22) Anmeldetag: **14.04.2015**

(51) Int Cl.:
*F16F 1/366* (2006.01)      *B29C 70/30* (2006.01)
*B29L 31/00* (2006.01)

(86) Internationale Anmeldenummer:
**PCT/EP2015/058031**

(87) Internationale Veröffentlichungsnummer:
**WO 2015/188963 (17.12.2015 Gazette 2015/50)**

(54) **TORSIONSBELASTETES STABFÖRMIGES BAUTEIL MIT UNTERSCHIEDLICHEN FASERVERSTÄRKUNGEN FÜR ZUG- UND DRUCKBELASTUNG**

TORSION-LOADED ROD-SHAPED COMPONENT WITH DIFFERENT FIBRE REINFORCEMENTS FOR TENSILE AND COMPRESSIVE LOADING

COMPOSANT EN FORME DE BARRE SOLLICITÉ EN TORSION ET POURVU DE DIFFÉRENTS RENFORCEMENTS EN FIBRES AUX FINS DE SOLLICITATION EN TRACTION ET EN PRESSION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **11.06.2014   DE 102014211096**

(43) Veröffentlichungstag der Anmeldung:
**19.04.2017   Patentblatt 2017/16**

(73) Patentinhaber:
• **thyssenkrupp AG**
  **45143 Essen (DE)**
• **Thyssenkrupp Federn und Stabilisatoren GmbH**
  **58119 Hagen (DE)**

(72) Erfinder:
• **KIELE, Jörn**
  **01097 Dresden (DE)**

• **HUFENBACH, Werner**
  **01324 Dresden (DE)**
• **LEPPER, Martin**
  **01279 Dresden (DE)**
• **WERNER, Jens**
  **01640 Coswig (DE)**

(74) Vertreter: **thyssenkrupp Intellectual Property GmbH**
  **ThyssenKrupp Allee 1**
  **45143 Essen (DE)**

(56) Entgegenhaltungen:
**EP-A2- 0 637 700      FR-A1- 2 859 735**
**US-A- 5 685 525**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Gegenstand der vorliegenden Erfindung ist eine Torsionsfeder, insbesondere als Stab- oder Schraubenfeder aus faserverstärktem Kunststoff, die kosteneffizient herstellbar ist und über ein verbessertes elastisches Energiespeichervermögen verfügt, insbesondere im Vergleich zu Federn, die nur aus kohlenstofffaserverstärktem Kunststoff bestehen und ein Verfahren zur Auslegung einer derartigen Feder.

Federn kommen häufig im Fahrwerk von Kraftfahrzeugen zum Einsatz. Sie unterliegen somit ebenfalls den Leichtbaubestrebungen, die zuallererst bei diesen ungefederten Massen ansetzen. In diesem Zusammenhang ist der Einsatz von Faserverbundwerkstoffen (FVW) bereits mehrfach vorgeschlagen worden. Dies betrifft insbesondere Torsionsfedern aus kohlefaserverstärkten Kunststoffen (CFK) und glasfaserverstärkten Kunststoffen (GFK). Besonders problematisch ist dabei die belastungsgerechte, jedoch gleichzeitig kostengünstige Fertigung dieser Bauteile.

Erschwerend kommt hinzu, dass die Fasern jeweils nur Zug- oder Druckkräfte übertragen können und somit die makroskopische Schubbelastung im Federdraht in einen Zug- und einen Druckanteil aufgeteilt werden muss (in Bezug auf die Spannungs-Hauptachsen +-45° zur Stabachse entsprechend der mohrschen Spannungstheorie).

Heute bekannte Federn aus FVW zielen darauf ab, mittels Wicklungen der Fasern in einem +/-45°-Winkel zur Stabachse die Zug- und Druckkraftverteilung im Material möglichst günstig aufzunehmen.

Es sind auch reine +45° Zugfaserwicklungen bekannt, wobei die Schubspannungsanteile durch das Matrixmaterial bzw. durch Druckspannungen im Kern getragen werden.

Ziel bei der Konstruktion geeigneter Federn ist es, das gesamte eingesetzte Federmaterial homogen zu belasten. So soll erreicht werden, dass es keine dedizierten Schwachstellen im Material gibt, sondern dass das gesamte Material bei einer einheitlichen Maximalbeanspruchung seine Belastungsgrenze erreicht. Dies entspricht der bestmöglichen Materialausnutzung und damit dem besten erreichbaren Leichtbaugrad.

Die EP 0637700 beschreibt eine Federkonstruktion, bei der Kohlefasern eingesetzt werden, die in einem Winkel von +-30° bis +-60° um die Stabachse gewickelt sind. Kennzeichnend ist, dass eine unterschiedliche Anzahl von Zug- und Druckfasern eingesetzt wird. Insbesondere wird die Zahl der Druckfasern gegenüber der der Zugfasern erhöht. Angestrebt wird dabei eine gleichmäßigere Belastung der Fasern, was eine bessere spezifische Ausnutzung des eingesetzten Materials bewirkt. Zwar wurde dadurch, dass die Fasern der Zug- und Druckrichtung in verschiedenen Mengen-Verhältnissen, respektive verschiedenen Schichtdicken benutzt werden, das Material besser ausgenutzt, jedoch wird die Abhängigkeit der Werkstoffauslastung vom Federdrahtdurchmesser nicht beseitigt.

Die US 5603490 schlägt vor, lediglich Fasern in der Zugrichtung und keine Druck belasteten Fasern einzusetzen. Die Fasern sollen so aufgewickelt werden, dass sie nur zugbelastet sind. Bei einer hohlen Feder würde dies aufgrund der Schubspannungen schnell zum Versagen führen, weshalb hier ein druckstabiler Kern benötigt wird, welcher die Spannungen aufnimmt. Der andauernde hydrostatische Spannungszustand im Kern und der Schubspannungszustand in der gewickelten Faserhülle führen allerdings zu einem nachteiligen Kriechen der Kunststoffmatrix (Epoxy). Daher ist diese Lösung z.B. für eine Anwendung im Fahrzeugbau (Dauerbelastung durch das Fahrzeuggewicht) nicht anwendbar. Durch den Einsatz nur einer Faserrichtung wird zwar das Faserpotential auf Zugbelastung optimal genutzt, aber durch die Schubspannungen, welche aufgrund der fehlenden Druckfaserabstützung nun zum größten Teil durch die Kunststoffmatrix übertragen werden müssen, kommt es zu starken Kriecherscheinungen bei Dauerbelastung

In der WO 2014/014481 A1 wird eine Faserkonstruktion vorgeschlagen, bei der die Anzahl der Fasern in Schichten und Kern Vielfache einer gemeinsamen Basiszahl sind. Weiterhin wird die Verwendung mehrerer verschiedener Materialien in einer Feder (z.B. Glas, Carbon oder in Mischung) offenbart. Darüber hinaus wird offenbart, dass die Winkel der einzelnen Fasern der Faserlagen zur Stabachse alternieren können (insbesondere zwischen positivem und negativem Winkel). Der Kern der Feder kann aus unidirektionalen Fasern bestehen es sind jedoch auch ein Vollkern oder ein Hohlkern offenbart. Auch ein Kern aus Material mit Formgedächtnis wird vorgeschlagen. Es wird zwar erwähnt, dass man das Federmaterial aus gemischten Werkstoffen zusammensetzen kann, jedoch wird keine Handlungsanweisung dazu gegeben, wodurch die Vorgehensweise und Wirkung einer Mischbauweise unklar bleiben. Die Fasern sollen in Anzahl des ganzzahligen Vielfachen einer gemeinsamen Bezugsbasis in den Schichten angeordnet werden, wobei die Wirkung ebenfalls unklar bleibt. Diese Anordnung hat den Nachteil, dass die Fasern nur in Anzahlen von ganzzahligen Faktoren in den Schichten vorhanden sind und somit eine optimale Schichtdickenanpassung unterbleibt.

Aus der FR 2 859 735 A1 sind Federdrähte in Form eines Zylinders und ein Verfahren zu deren Herstellung bekannt. Nicht bekannt aus der FR 2 859 735 A1 ist eine Gruppensteifigkeit die je nach Schichtgruppe variiert.

Aus der EP 0 637 700 A2 (Familienmitglied US 5685525) ist eine Spiralfeder aus kohlenfaserverstärktem Kunststoff und Verfahren zur Herstellung bekannt. Aus der EP 0 637 700 A2 ist keine Gruppensteifigkeit bekannt die je nach Schichtgruppe variiert.r

Die Federbauweisen aus dem Stand der Technik erreichen keinen optimalen Leichtbaugrad, da sie das eingesetzte Material nicht effektiv ausnutzen.

Es stellt sich somit die Aufgabe, eine Anordnung der Fasern innerhalb eines torsionsbelasteten Federdrahtes zu erzeugen, bei welcher die druck- und zugbelasteten Fasern entsprechend ihrer Auslastungsgrenze möglichst hoch belastetet werden, um eine verbesserte massebezogene Energiespeicherdichte zu erreichen. Insbesondere ist es Aufgabe der vorliegenden Erfindung, möglichst nur eine begrenzte Anzahl verschiedener Fasermaterialien einzusetzen, um so bezogen auf den Materialeinsatz eine kostengünstige Bauweise zu erzielen und ein Verfahren zur Auslegung einer derartigen Feder vorzuschlagen. Der Federdraht (auch Federstab) ist in einer Schraubenfeder als Helix aufgewickelt. Die Feder, speziell die Schraubenfeder, verfügt über eine Federachse, um die der Federdraht helixartig herumgeführt ist. Der Querschnitt des Federdrahtes ist vorzugsweise kreisringförmig, kann aber auch elliptisch oder polygonal sein.

Erfindungsgemäß wird die Aufgabenstellung mit einer Federkonstruktion nach Anspruch 1 gelöst. Vorteilhafte Ausführungsformen sind in den rückbezogenen Unteransprüchen offenbart.

Insbesondere wird dieser Aufgabenstellung durch die Erfüllung der folgenden drei Teilaufgaben genügt:

- die Lagenauswahl erfolgt nach ökonomisch rationalen Gesichtspunkten, so dass insbesondere für die zugbelasteten Faserlagen hoch ausgelastete Kohlenstofffaserlagen zur Anwendung kommen,

- Zug- und Drucklagen sollen gleichmäßig ausgelastet werden,

- zwischen den Lagen soll die Matrix möglichst wenige Schubkräfte respektive Spannungen übertragen, um ein Kriechen des Matrixmaterials und damit eine dauerhafte Verformung der gesamten Feder zu verhindern.

Der Bereich des torsionsbelasteten stabförmigen Bauteils umfasst lediglich die Federtragstruktur ohne die Lasteinleitungselemente, wie zum Beispiel angepasste Bereiche am Federteller oder der Federeinspannung.

Im Weiteren werden die folgenden Begriffe in den nachstehenden Bedeutungen gebraucht:

| | |
|---|---|
| - Zugrichtung: | Vorzeichen + |
| - Druckrichtung: | Vorzeichen - |
| - Stabachse: | - Eine Achse im Mittelpunkt des Federdrahts entlang seiner Längserstreckung, die als Federdrahtachse oder Federstabachse oder einfach Stabachse bezeichnet wird. |
| - Faserwinkel $\alpha_j$: | - Der Faserwinkel gibt den Differenzwinkel der Faserorientierung zur Stabachse an. |
| - Lage $L_i$: | - Eine Lage kann mehrere Schichten in sich vereinen, z.B. eine Lage Multiaxialgelege / Helixwicklung / Geflecht enthält im allg. 2 Schichten mit unterschiedlicher Faserorientierung (jeweils eine + und eine - Schicht; z.B. +-45°). Die Schichten der Lage sind üblicherweise miteinander verbunden (z.B. onduliert oder gewirkt oder vernäht oder stoffschlüssig fixiert). |
| | - Eine Lage UD(unidirektional)-Gelege enthält dagegen im allg. nur eine Schicht in einer Orientierung ausgerichteter Fasern. |
| | - Mehrere Lagen können jedoch auch eine Schicht bilden (mehrere benachbarte UD-Lagen mit gleicher Winkelorientierung und gleichem Lagenmaterial bilden eine UD-Schicht). |
| | - Eine Lage besteht im allgemeinen aus anorganischen Verstärkungsfasern (bspw. Basaltfasern, Glasfasern), metallischen Verstärkungsfasern (bspw. Stahlfaser), organischen Verstärkungsfasern (bspw. Kohlenstofffasern, Aramidfasern) oder Naturfasern (bspw. Hanffasern). |
| | - Eine Lage besitzt eine zugeordnete Lagenwandstärke $LW_i$ |
| | - Eine Lage kann auch eine homogene Kunststofflage ohne Verstärkungsfasern sein und sie wird als nicht-tragend klassifiziert (zum Beispiel: äußerer Abschluss der Anordnung). |
| | - Eine Lage kann auch eine kurz- oder -langfaserverstärkte Kunststofflage sein, in der die Fasern ohne Vorzugsrichtung angeordnet sind und sie wird als nicht-tragend klassifiziert. |
| | - Eine Lage kann auch aus einer metallischen Werkstofflage bestehen (zum Beispiel eine Abschlusslage aus Metallblech) |
| | - Die Lagennummerierung i nimmt von innen nach außen zu |
| - Schicht $S_j$: | - Bei endlos-/textilfaserverstärkten Schichten weisen alle Fasern einer Schicht $S_j$ eine einheitliche Winkel-Orientierung $\alpha_j$ auf. |
| | - In einer Schicht können jedoch auch Fasern unterschiedlichen Materials $M_j$ nebeneinander oder vermischt vorliegen. |

(fortgesetzt)

- Schichten können auch homogene Kunststofflagen ohne Verstärkungsfasern, Lagen mit einer kurz- oder langfaserverstärkten Kunststofflage , metallische Lagen oder ähnliches sein

- Die Schichtnummerierung j nimmt von innen nach außen zu.

- Die Schichten mit Faserwinkel im Bereich von 20° bis 70° in der Zugrichtung (+) oder -20°bis -70° in der Druckrichtung (-) werden als tragende Schichten bezeichnet (vorzugsweise 30° bis 60° in der Zugrichtung (+) oder -30°bis -60° in der Druckrichtung (-))

- Eine tragende Schicht dient entweder vorwiegend der Aufnahme von Zug- (Zeichen +) oder Druckspannungen (Zeichen -) in Faserrichtung

- Alle Schichten mit Winkeln außerhalb des Winkelbereichs von 20° bis 70° in der Zugrichtung (+) oder -20° bis -70° in der Druckrichtung (-) werden als nicht-tragende klassifiziert.

| | |
|---|---|
| - Querschnittsfläche $A_{Sj}$: | - Jede Schicht hat eine zugeordnete Querschnittsfläche $A_{Sj}$ |
| | - Die Normale der Querschnittsfläche ist die Stabachse |
| | - Die Berechnung der Querschnittsfläche erfolgt beispielsweise bei einem Kreisringquerschnitt über die Formel für den Flächeninhalt des Kreisrings |
| - Schichtachse: | - Jede Schicht besitzt ein Achse, welche im Faserwinkel $\alpha_j$ zur Stabachse verläuft und mit dem Schichtverlauf in einer Helix entlang der Stabachse rotiert. |
| - Schichtdurchmesser $D_j$: | - Arithmetisch gemittelter Durchmesser aus Innen- und Außendurchmesser der entsprechenden Schicht |
| | - Für den Fall, dass wie bei ondulierten Lagen (bspw. Geflecht) 2 Schichten abgeleitet werden, besitzen beide Schichten denselben Schichtdurchmesser |
| - Schichtsteifigkeit $E_{Sj}$: | Die Schichtsteifigkeit $E_{Sj}$ entspricht dem Einzel- oder Mischmodul aller Faser- und Matrixkomponenten der jeweiligen Schicht (entsprechend der Mischungsregel im Rahmen der klassischen Laminattheorie (z.B. Puck, Tsai, Niederstadt, Geier) transformiert auf eine Orientierung von +/- 45° zur Stabachse |
| | - Nur Absolutwerte werden verwendet |
| | - Berechnungsformel für die Schichtsteifigkeit $E_{Sj}$: |

$$\frac{1}{E_{S_j}} = \frac{c^2}{E_1}\left(c^2 - s^2 v_{12}\right) + \frac{s^2}{E_2}\left(s^2 - c^2 v_{21}\right) + \frac{c^2 s^2}{G_{12}}$$

*mit c* = cos (|$\alpha$| - 45°) *und s* = sin (|$\alpha$| - 45°)

$E_{Sj}$ - Schichtsteifigkeit, $E_1$ - Steifigkeit längs zur Faser des Materials $M_j$, $E_2$ - Steifigkeit quer zur Faserrichtung des Materials $M_j$, $G_{12}$-Schubmodul des Materials $M_j$, $v_{12}$ - Große Querkontraktionszahl des Materials $M_j$, $v_{21}$ - Kleine Querkontraktionszahl des Materials $M_j$

| | |
|---|---|
| - Gruppe $G_k$: | - Eine oder mehrere aneinanderliegende, tragende Schichten einer Belastungsrichtung (Zug- oder Druckausrichtung) bilden zusammen jeweils eine Gruppe $G_k$ |
| | - Die Gruppenbildung ist unabhängig von den verwendeten Materialien oder der Lagenzugehörigkeit |
| | - Als nicht-tragend klassifizierte Schichten oder Lagen werden bei der Bewertung des Aneinanderliegens nicht berücksichtigt, damit können auch ggf. sich physikalisch nicht berührende Schichten als aneinanderliegend angesehen werden. |
| | - Die Zählung der Gruppen beginnt innen |
| - Gruppenachse: | - Jede Gruppe besitzt entsprechend der Zug oder Druckausrichtung eine Gruppenachse die in +45° (Zug) oder -45° (Druck) zur Stabachse verläuft und mit dem Schichtverlauf in einer Helix entlang der Stabachse rotiert |
| - Gruppensteifigkeit $E_{Gk}$: | - Die Gruppensteifigkeit $E_{Gk}$ entspricht dem in Gruppenachsenrichtung transformierten, flächengewichteten Einzel- oder Mischmodul aller Faser- und Matrixkomponenten der jeweiligen Gruppe (entsprechend der Mischungsregel im Rahmen der klassischen Laminattheorie (z.B. Puck, Tsai, Niederstadt, Geier) |
| | - Nur Absolutwerte werden verwendet |
| | - Berechnungsformel für die Gruppensteifigkeit $E_{Gk}$: |

$$E_{G_k} = \frac{\sum_j E_{S_j} A_{S_j}}{\sum_j A_{S_j}}, \; wobei\; Schichten\; j\; zur\; Gruppe\; k\; gehören\;\; E_{G_k}\text{ - Gruppensteifigkeit}$$

der Gruppe k, $E_{S_j}$ - Schichtsteifigkeit der Schicht j, $A_{S_j}$ - Querschnittsfläche der Schicht j

- Gruppendehnsteifigkeit $F_{G_k}$:

- Produkt aus Gruppensteifigkeit und zugeordneter Querschnittsfläche der Gruppe

- Berechnungsformel für die Gruppendehnsteifigkeit $F_{Gk}$:  $\quad F_{G_k} = E_{G_k} \times \sum_j A_{S_j} \; x$

*wobei Schichten j zur Gruppe k gehören* $F_{G_k}$ - Gruppendehnsteifigkeit der Gruppe k, $E_{G_k}$ - Gruppensteifigkeit der Gruppe k, $A_{S_j}$ - Querschnittsfläche der Schicht j

- Paar $P_n$:
- 2 aneinander liegende Gruppen bilden jeweils ein Paar (aus der Gruppenbildung ergibt sich zwangsweise, dass ein Paar immer aus 2 Gruppen mit einer Gruppenachse +45° und -45° besteht)

- Als nicht-tragend klassifizierte Schichten oder Lagen werden bei der Bewertung des Aneinanderliegens nicht berücksichtigt, damit können auch ggf. sich physikalisch nicht berührende Gruppen als aneinanderliegend angesehen werden.

- Die Paarbildung beginnt an der innersten Gruppe und wird sukzessive nach außen fortgeführt

- Eine bereits einem Paar erfolgreich zugeordnete Gruppe kann nicht mit einer weiteren aneinanderliegenden Gruppe ein Paar bilden.

- Gruppenverhältnis $GV_n$:
- Den Gruppen in einem Paar wird ein Gruppenverhältnis wie folgt zugeordnet: Gruppendehnsteifigkeit der Gruppe mit Gruppenachse +45° geteilt durch Gruppendehnsteifigkeit der Gruppe mit Gruppenachse -45° (die Gruppendehnsteifigkeiten sind dabei vorzeichenlos, weil nur Absolutwerte der Gruppensteifigkeit in die Berechnung einfließen)

- Paarverhältnis $PV_n$:
- Zwei aneinander liegenden Paaren wird ein Paarverhältnis wie folgt zugeordnet: Steifigkeit des inneren Paares geteilt durch Steifigkeit des anliegenden Paares

- Mischfaser
- Roving oder Faserbündel, welcher sich aus Filamenten verschiedenen Materials zusammensetzt

Für die weiterführenden Betrachtungen zum Auslegungsverfahren bzw. der Faseranordnung im Federdraht wird von einer idealen Übereinstimmung der berechneten oder definierten Faserwinkel $\alpha_j$ im gefertigten Bauteil ausgegangen. Etwaige Winkelverschiebungen, jeweils in + und in -Richtung von den berechneten Werten, aufgrund von Umformoperationen (zum Beispiel: Das Aufwickeln des gestreckten Federdrahts entlang der Federachse in eine Helix), anlagenspezifischen Fertigungsabweichungen (zum Beispiel: Schwankungen der Rotationsgeschwindigkeit der Wickelanlage) oder Verschiebungen durch Handlingoperationen (zum Beispiel: Manueller Transport der Zwischenprodukte) im gefertigten Bauteil sind für die Aussagen des vorgestellten Auslegungsverfahrens nicht relevant, solange die absolute Winkeldifferenz weniger als 20°, vorzugsweise weniger als 10° und ganz besonders bevorzugt weniger als 5° beträgt.

Das bevorzugte Verfahren zur Auslegung der erfindungsgemäßen Feder sieht vor:
Eine Vorauslegung der Feder wird basierend auf Erfahrungswerten und nach dem Stand der Technik vorgenommen. Die Parameter dieser Feder werden als Startparameter zur Optimierung der Feder nach dem erfindungsgemäßen Verfahren genutzt.

Alle nachfolgend aufgeführten Auslegungsschritte müssen iterativ einzeln oder gesamtheitlich wiederkehrend durchgeführt werden, um in einem Schleifenprozess alle geforderten Auslegungskriterien zu erfüllen.

Schritt 1:

In einem ersten Schritt wird der Aufbau des Federdrahtes so gestaltet, dass in mindestens einer zugbelasteten Gruppe ein sehr steifes Fasermaterial, beispielsweise Kohlenstofffasern, eingesetzt werden. Aus dem Auslegungsprozess ist damit eine zugbelastete Gruppe identifizierbar, die über die höchste Gruppensteifigkeit verfügt. Nun muss mindestens eine druckbelastete Gruppe derart ausgelegt werden, dass sie über eine geringere Gruppensteifigkeit verfügt. Als gering klassifiziert gilt die druckbelastete Gruppe, wenn sie bezogen auf die zugbelastete Gruppe mit der höchsten Gruppensteifigkeit über eine Gruppensteifigkeit von höchstens 90%, bevorzugt höchstens 80% und besonders bevorzugt höchstens 60% verfügt. Das heißt, dass für mindestens eine druckbelastete Gruppe sich die Gruppensteifigkeit um mindestens 10%, bevorzugt mindestens 20% und besonders bevorzugt um 40% bezogen auf die zugbelastete Gruppe mit der höchsten Gruppensteifigkeit vermindert hat. Bevorzugt wird die geringere Gruppensteifigkeit über den Einsatz von beispielsweise Glasfasermaterial erreicht. Bevorzugt existieren mehrere zugbelastete Gruppen aus Kohlenstofffasern mit aneinanderliegenden druckbelasteten Gruppen geringerer Gruppensteifigkeit. Besonders bevorzugt bestehen alle zugbelasteten Gruppen aus Kohlenstofffasern und alle druckbelasteten Gruppen besitzen eine geringere Gruppensteifigkeit.

Dies wird z.B. mittels einer oder einer Kombination von zwei oder drei der folgenden Möglichkeiten erzielt:

Möglichkeit I: Unterschiedliches Fasermaterial

- hierzu werden in der zugbelasteten Gruppe hochfeste Fasern (z.B. HT-CF) und in der druckbelasteten Gruppe niedrig steife Fasern (z.B. GF) verwendet.

Möglichkeit II: Unterschiedliche Faserwinkel

- Die Feinabstimmung der Gruppensteifigkeit kann durch die Faserwinkel geschehen, so dass die druckbelastete Gruppe über eine geringere Gruppensteifigkeit verfügt.

Möglichkeit III: Mischung verschiedener Fasern

- Werden die Steifigkeitssprünge für einen Ausgleich durch die Faserwinkel zu groß, kann auch unterschiedliches Material mit einer Mischung aus Grundfasertypen zum Einsatz kommen, so dass die benötigten geringeren Gruppensteifigkeiten der druckbelasteten Gruppe eingestellt werden können.

Schritt 2:

Nun werden von innen nach außen Paare gebildet. Ursache für das Problem des Kriechens von Matrixmaterial im Falle von Dauerbelastungen ist im Allgemeinen eine sehr hohe Schubspannung zwischen den Gruppen in der Feder. Um Schubspannungen zwischen den Gruppen zu vermeiden bzw. stark zu reduzieren sollen die Gruppen eines Paares vergleichbare Gruppendehnsteifigkeiten aufweisen, die zum Beispiel mittels der Querschnittsfläche, dem Faservolumengehalt, dem Faserwinkel oder der Materialauswahl beeinflussbar sind. Aus den beiden Gruppendehnsteifigkeiten eines Paares errechnet sich das Gruppenverhältnis. Das Gruppenverhältnis muss innerhalb eines vorgegebenen Bereichs liegen. Das Auslegungsverfahren sieht vor, dass das Gruppenverhältnis GV im Bereich $0,2 \leq GV \leq 5$, vorzugsweise: $0,5 \leq GV \leq 2$ und ganz besonders bevorzugt $0,75 \leq GV \leq 1,33$ liegt.

Zur Erzielung gültiger Gruppenverhältnisse ist z.B. die Kompensation der unterschiedlichen Materialsteifigkeiten von unterschiedlichen Faserarten über angepasste Querschnittsflächen notwendig. Dazu wird die Fasersteifigkeit in einer bevorzugten Verfahrensweise entsprechend der Auslastbarkeit der Fasern gewählt. So besitzen bspw. Kohlenstofffasern (z.B. HT-CF) unter Druckbelastungen eine geringe Energiespeicherdichte und sind daher vorzugsweise für zugbelastete Schichten effizient einsetzbar. GF- Fasern besitzen eine gute Kompressionsfähigkeit und sind daher auch für druckbelastete Schichten gut verwendbar. Beispielsweise bilden nun eine zugbelastete Gruppe aus HT-CF Fasern und eine druckbelastete Gruppe aus GF Fasern mit jeweils nur einer Schicht ein Paar. Die zugbelastete Gruppe (HT-CF) besitzt nun eine höhere Gruppensteifigkeit als die druckbelastete Gruppe (GF). Um ein bevorzugtes Gruppenverhältnis einzustellen, ist es möglich die Schichtwandstärke und damit die Querschnittsfläche anzupassen. Das Produkt aus Gruppensteifigkeit und zugeordneter Querschnittsfläche bildet die Gruppendehnsteifigkeit. Für das Paar, bestehend aus HT-CF und GF Fasern, können die Schichtwandstärken beispielsweise für die zugbelastete Gruppe 1 mm und für die druckbelastete Gruppe 2,5 mm betragen. Damit sind über die zugeordneten Querschnittsflächen die Gruppendehnsteifigkeiten für die zugbelastete und die druckbelastete Gruppe zueinander angleichbar und das Gruppenverhältnis besitzt einen Wert innerhalb des gewünschten Bereichs. Zwischen den Gruppen bestehen damit nahezu keine Schubspannungen und der Federdraht besitzt damit ein vorteilhaftes Kriechverhalten.

Weitere bevorzugte Ausführungsformen sehen den Einsatz einer oder mehrerer sehr dünner und damit kaum zum Bauteiltragverhalten beitragender Zwischen- oder Außenschichten vor, die durch ihre Faserorientierung beispielsweise zur Federquerkraftsteifigkeit beitragen oder eine Abschlussschicht gegenüber medialer Umweltbelastung darstellen. Erfindungsgemäß sollen jedoch nur maximal 25%, vorzugsweise 15%, besonders bevorzugt 5%, der Federdrahtmasse (ohne Kern) aus als nicht-tragend klassifizierten Schichten bestehen.

Weiterhin bevorzugt ist die Verwendung eines Federdrahtes, in welchem die Masse der druckbelasteten Gruppen mit einer geringeren Gruppensteifigkeit mindestens einen Anteil von 20 %, bevorzugt von 50% und besonders bevorzugt von 95% bezogen auf die Masse aller druckbelasteten Gruppen des Federdrahtes ausmacht. Eine ganz besonders bevorzugte Ausführungsform der erfindungsgemäßen Torsionsfeder sieht vor, dass die zugbelasteten Gruppen, von innen nach außen, dieselbe Gruppensteifigkeit (im Rahmen der Fertigungstoleranzen) aufweisen. In einer weiterhin besonders bevorzugten Ausführungsform weisen auch die druckbelasteten Gruppen oder nur diese, von innen nach außen dieselbe Gruppensteifigkeit (im Rahmen der Fertigungstoleranzen) auf. Weiterhin bevorzugt verfügt mindestens eine innenliegende druckbelastete Gruppe über eine geringere Gruppensteifigkeit, bezogen auf eine weiter außen liegende zugbelastete Gruppe.

Weiterhin bevorzugt ist die Verwendung eines Federdrahtes, in welchem die Gruppen des Federdrahtes mindestens zu einem Anteil von 50 %, bevorzugt von 75% und besonders bevorzugt von 95%, der Federdrahtgesamtmasse (ohne Kern) erfolgreich zu einem Paar zugeordnet wurden.

Weiterhin bevorzugt ist das Aufbringen einer äußeren Kunststofflage bzw. Lage aus Matrixmaterial ohne Faserverstärkung. Das erfindungsgemäße Verfahren sieht jedoch vor, dass mindestens 75%, bevorzugt 85%, besonders bevorzugt 95% der elastischen Energie im Belastungsfall von dem Faserverbundwerkstoff und nicht von der äußeren Kunststofflage gespeichert werden. Dies umfasst auch die Möglichkeit, dass die äußere Kunststofflage reißt, jedoch die faserverstärkten Lagen und der optional vorhandene Kern, unbeschädigt bleiben.

Bevorzugt erfolgt die rechnerische Auslegung der erfindungsgemäßen Feder mit Computerunterstützung. Nach der Auslegung entsprechend dem erfindungsgemäßen Verfahren wird die Feder mit Verfahren aus dem Stand der Technik gefertigt.

Erfindungsgemäß ist der tragende Federquerschnitt (Beschichtungen etc. die nicht-tragend sind, werden vernachlässigt) in seiner Materialauswahl derart gestaltet, dass die druck- und zugbelasteten Gruppen aus einer kleinen Anzahl unterschiedlicher Fasermaterialien aufgebaut sind. Bevorzugt kommt für die druckbelasteten Gruppen ein kostengünstiges Material, wie zum Beispiel Glasfaser (GF) zum Einsatz. Im Bereich der zugbelasteten Fasern kann auch Kohlefaser (Carbon Fiber - CF) eingesetzt werden, um die massespezifische Energiespeicherdichte zu erhöhen.

Bevorzugt weist der Federstab der erfindungsgemäßen Feder einen kreisförmigen Querschnitt auf. Es sind jedoch auch elliptische oder polygonale Querschnitte möglich. Die Feder weist optional einen Kern auf. Dieser besteht vorzugsweise aus Faserverbundmaterial, bei dem die Fasern unidirektional, parallel zur Stabachse verlaufen. Weitere bevorzugte Ausführungsformen sehen einen hohlen Kern vor, bei dem ein axialer Hohlraum von einem Faserverbundmaterial oder einer unverstärkten Kunststoffumhüllung umgeben ist. Weiterhin bevorzugt ist ein Kern, der vollständig aus Kunststoff besteht oder ein Kern, der ausschließlich durch einen Hohlraum gebildet wird.

Weiterhin bevorzugt bilden benachbarte Paare ein, nur wenig voneinander abweichendes Paarverhältnis, so dass auch zwischen den Paaren möglichst geringe Schubspannungen auftreten und somit der Federdraht eine möglichst geringe Kriechneigung aufweist. Dieses Paarverhältnis berechnet sich aus den Steifigkeiten der Gruppen der beiden Paare.

Die erfindungsgemäße Feder wird bevorzugt im Fahrzeugbau, bei Kraftfahrzeugen und Schienenfahrzeugen verwendet. Es ist jedoch ein Einsatz für alle Einsatzgebiete von Schrauben- oder allgemeiner von Torsionsfedern denkbar, bei denen die Umweltbedingungen die verwendeten Materialien der Feder nicht in unzulässigem Ausmaß angreifen.

## Figuren

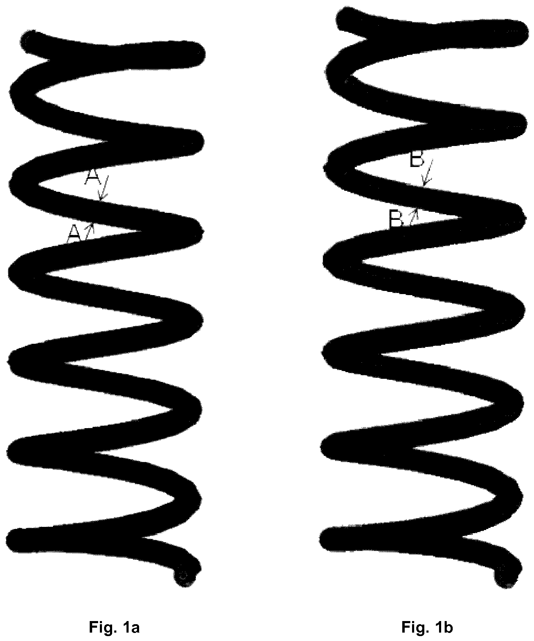

Die Figuren **Fig. 1a** und **Fig. 1b** zeigen schematisch zwei Ausführungsformen der erfindungsgemäßen Torsionsfeder. In Fig. 1a ist diese als Schraubenfeder mit Kern und in Fig. 1b als Schraubenfeder ohne Kern dargestellt.

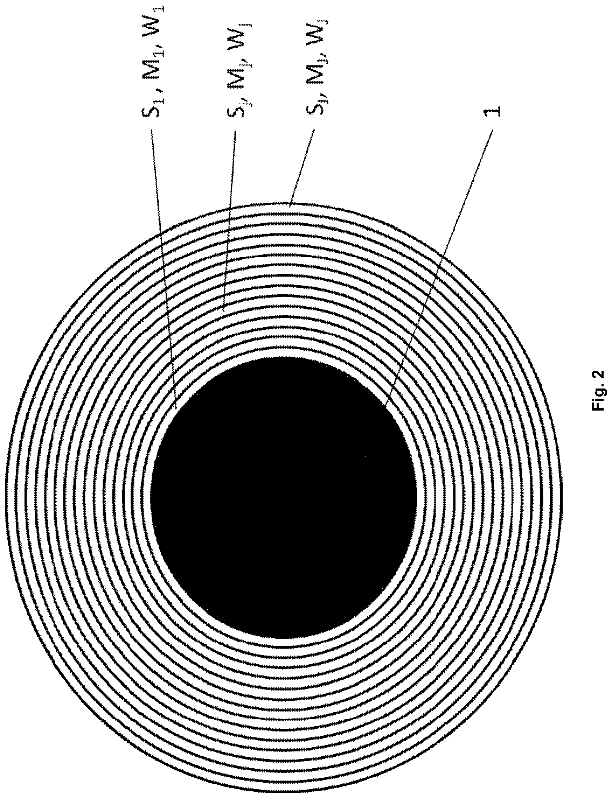

**Fig. 2** zeigt schematisch den Querschnitt A-A einer Feder nach Fig. 1a mit Vollkern (1) und verschiedenen Schichten ($S_1$, bis $S_J$) mit den zugehörigen Schichtwandstärken und Schichtmaterialien

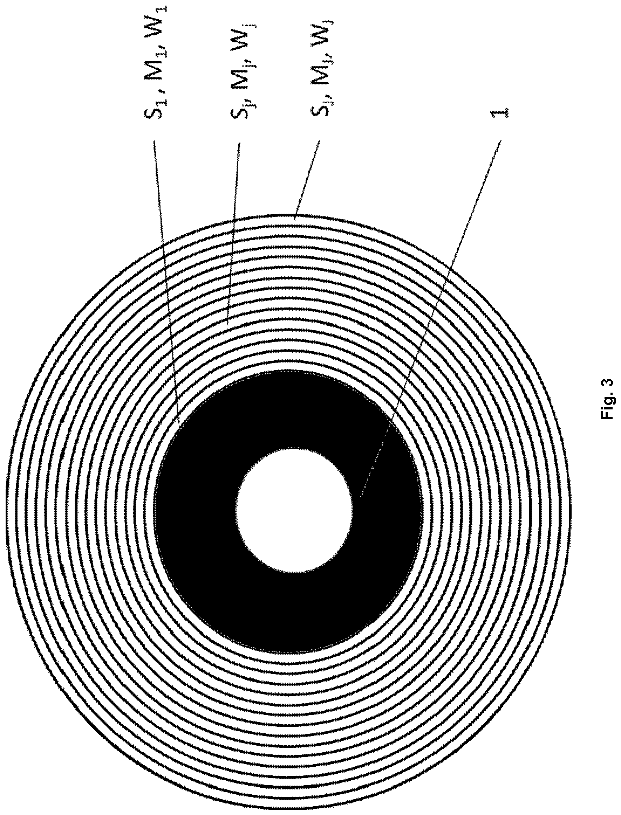

**Fig. 3** zeigt schematisch den Querschnitt A-A einer Feder nach Fig. 1a mit rohrförmigen Kern (1) und verschiedenen Schichten ($S_1$, bis $S_J$) mit den zugehörigen Schichtwandstärken und Schichtmaterialien

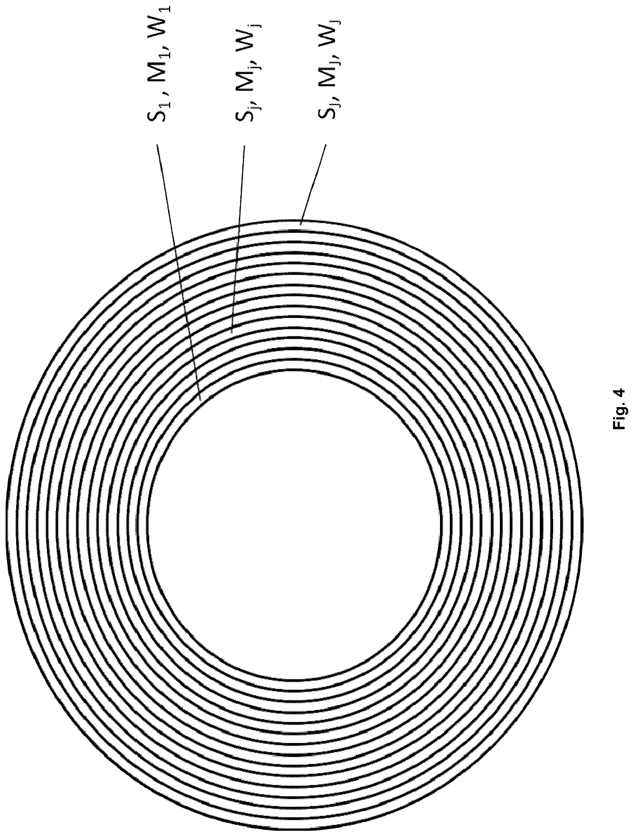

**Fig. 4** zeigt schematisch den Querschnitt B-B einer Feder nach Fig. 1b ohne Kern und verschiedenen Schichten ($S_1$, bis $S_J$) mit den zugehörigen Schichtwandstärken und Schichtmaterialien

**Fig. 5** zeigt schematisch die Anordnung der erfindungsgemäßen Federdrahts entsprechend dem Ausführungsbeispiel 1 (Tabellen 1 und 2) mit einem gewickelten Textil, wobei die Schichten immer abwechselnd als Glasfaserlage (druckbelastet) und Kohlenstofffaserlage (zugbelastet) angeordnet sind. Auf der Außenseite der Feder ist eine homogene Kunststoffaußenlage angeordnet.

**Fig. 6** zeigt schematisch die Anordnung der erfindungsgemäßen Federdrahts entsprechend dem Ausführungsbeispiel 2 (Tabellen 3 und 4) mit einem gewickelten Textil, wobei die druckbelasteten Schichten als Basaltfaserlage und die zugbelasteten Schichten als Kohlenstofffaserlage ausgeführt sind. Die Feder besitzt in der vierten Lage Fasern, die entlang der Stabachse orientiert sind.

**Tabellen**

**Tabelle 1** zeigt das Ausführungsbeispiel 1 des erfindungsgemäßen Auslegungsverfahrens mit einem gewickelten Textil, wobei die Schichten immer abwechselnd als Glasfaserlage (druckbelastet) und Kohlenstofffaserlage (zugbelastet) angeordnet sind. Die Tabelle ist zweiteilig dargestellt, wobei im zweiten Teil die ersten vier Spalten als kennzeichnende Angaben zur besseren Lesbarkeit nochmals eingefügt wurden.

**Tabelle 2** zeigt die für das Ausführungsbeispiel 1 eingesetzten Fasermaterialien mit ihren Eigenschaften. Die Eigenschaften sind aus dem Stand der Technik bekannt und wurden hier lediglich zusammengestellt.

**Tabelle 3** zeigt das Ausführungsbeispiel 2 des erfindungsgemäßen Auslegungsverfahrens mit einem gewickelten Textil, wobei die druckbelasteten Schichten als Glas- oder Basaltfaserlage und die zugbelasteten Schichten als Kohlenstofffaserlage angeordnet sind. Das Ausführungsbeispiel 2 besitzt in der vierten Lage Fasern, die entlang der Stabachse orientiert sind. Die Tabelle ist ebenfalls zweiteilig dargestellt, wobei im zweiten Teil die ersten vier Spalten als kennzeichnende Angaben zur besseren Lesbarkeit nochmals eingefügt wurden.

**Tabelle 4** zeigt die für das Ausführungsbeispiel 2 eingesetzten Fasermaterialien mit ihren Eigenschaften. Die Eigenschaften sind aus dem Stand der Technik bekannt und wurden hier lediglich zusammengestellt.

**Ausführungsbeispiel**

Die Berechnung der Querschnittsfläche erfolgt in allen Ausführungsbeispielen über die Formel für den Kreisringquerschnitt. Zu den jeweiligen Ausführungsbeispielen werden die konkreten Sachverhalte mit einer Schnittdarstellung des Federdrahts, einer Tabelle zur Beschreibung der Federdrahtkennwerte und einer Tabelle zur Darstellung der zugeordneten Materialkennwerte beschrieben.

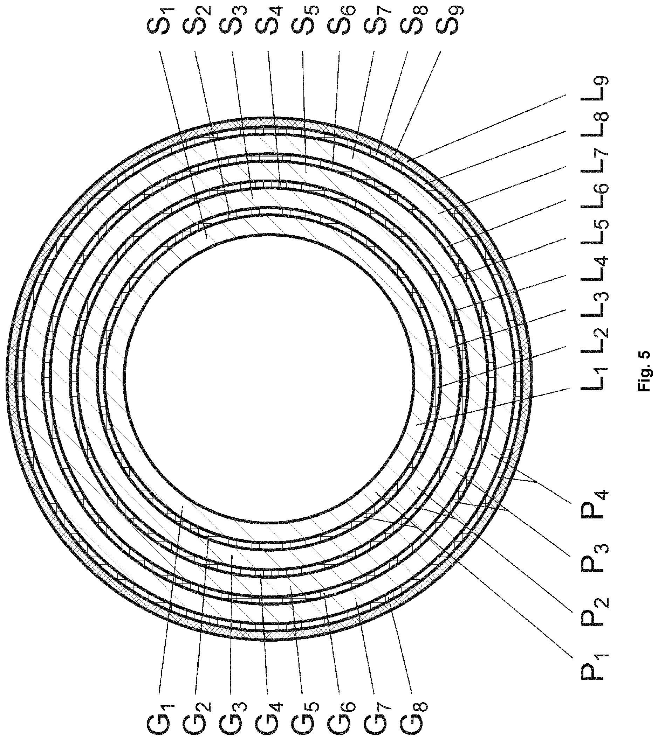

Das Ausführungsbeispiel 1 zeigt eine erfindungsgemäße Federdrahtanordnung bestehend aus gewickelten Textillagen und einem Hohlkern (Fig. 5). In Tabelle 1 und 2 werden die Anordnungskennwerte des Federdrahts und die Materialeigenschaften der verwendeten Materialien dargestellt. Der Federdraht ist dadurch gekennzeichnet, dass immer abwechselnd für die Druckbelastung eine Glasfaserlage und für die Zugbelastung eine Kohlenstofffaserlage eingesetzt wird. Durch den großen Unterschied der Fasersteifigkeiten zwischen Glas- und Kohlenstofffaser muss die Gruppendehnsteifigkeit über die Querschnittsfläche zueinander angepasst werden. In diesem Beispiel erfolgt dies über die deutlich geringere Schichtwandstärke der Kohlenstofffaserschicht mit 0,4 mm im Vergleich zur Glasfaserschicht mit 1,1 mm. Die Lage 9 ist eine nicht-tragende Schicht, weil sie als homogene Kunststofflage keine Vorzugsfaserverstärkung in zug- oder druckorientierter Belastungsrichtung aufweist. Vielmehr stellt die Lage 9 den Abschluss des Federdrahts nach außen zur Umwelt dar. Mögliche Aufgaben sind dabei die Abschirmung gegen mediale Umgebungseinflüsse, ein möglicher Impactschutz (bspw. Steinschläge), eine tribologische Beständigkeit (bspw. reibbeständige Schutzschicht in den Federtellern) oder die Verhinderung von Kontaktkorrosion. Die nicht-tragenden Schichten besitzen einen Masseanteil von etwa 7% bezogen auf die Gesamtmasse des Federdrahtquerschnitts (die Masse eines eventuell vorhandenen Federdrahtkerns wird für die Berechnung nicht berücksichtigt). Die Glasfaser- und Kohlenstofffaserschichten bilden im Ausführungsbeispiel jeweils Gruppen. Alle Gruppen werden erfolgreich zu Paaren zugeordnet. Erfindungsgemäß verfügen alle druckbelasteten Gruppen über eine geringere Gruppensteifigkeit und damit bildet das Ausführungsbeispiel 1 eine bevorzugte Variante für eine erfindungsgemäße Torsionsfeder.

| Lage Li | Schicht Sj | Gruppe Gk | Paar Pn | Klassifizierung | Belastung | Orientierung [Grad] | Material Mj | Lagenwand-stärke LWi [mm] | Schichtwand-stärke Wj [mm] | Schichtdurch-messer Dj [mm] |
|---|---|---|---|---|---|---|---|---|---|---|
| 1 | 1 | 1 | 1 | tragend | druck | -45 | 2 | 1,10 | 1,10 | 8,55 |
| 2 | 2 | 2 |  | tragend | zug | 45 | 1 | 0,40 | 0,40 | 9,30 |
| 3 | 3 | 3 | 2 | tragend | druck | -45 | 2 | 1,10 | 1,10 | 10,05 |
| 4 | 4 | 4 |  | tragend | zug | 45 | 1 | 0,40 | 0,40 | 10,80 |
| 5 | 5 | 5 | 3 | tragend | druck | -45 | 2 | 1,10 | 1,10 | 11,55 |
| 6 | 6 | 6 |  | tragend | zug | 45 | 1 | 0,40 | 0,40 | 12,30 |
| 7 | 7 | 7 | 4 | tragend | druck | -45 | 2 | 1,10 | 1,10 | 13,05 |
| 8 | 8 | 8 |  | tragend | zug | 45 | 1 | 0,40 | 0,40 | 13,80 |
| 9 | 9 |  |  | nicht-tragend |  |  | 3 | 0,50 | 0,50 | 14,25 |

Tabelle 1

| Lage Li | Schicht Sj | Gruppe Gk | Paar Pn | Querschnitts-fläche [mm2] | Masse [kg/m] | FVG [%] | Schichtsteifigkeit [GPa] | Gruppensteifigkeit [GPa] | Gruppendehn-steifigkeit [kN] | Gruppen-verhältnis GVn |
|---|---|---|---|---|---|---|---|---|---|---|
| 1 | 1 | 1 | 1 | 14,77 | 0,03 | 0,50 | 44,70 | 44,70 | 660,37 | 1,03 |
| 2 | 2 | 2 |  | 5,84 | 0,01 | 0,50 | 116,00 | 116,00 | 677,83 | |
| 3 | 3 | 3 | 2 | 17,37 | 0,03 | 0,50 | 44,70 | 44,70 | 776,22 | 1,01 |
| 4 | 4 | 4 |  | 6,79 | 0,01 | 0,50 | 116,00 | 116,00 | 787,16 | |
| 5 | 5 | 5 | 3 | 19,96 | 0,04 | 0,50 | 44,70 | 44,70 | 892,08 | 1,00 |
| 6 | 6 | 6 |  | 7,73 | 0,01 | 0,50 | 116,00 | 116,00 | 896,48 | |
| 7 | 7 | 7 | 4 | 22,55 | 0,04 | 0,50 | 44,70 | 44,70 | 1007,93 | 1,00 |
| 8 | 8 | 8 |  | 8,67 | 0,01 | 0,50 | 116,00 | 116,00 | 1005,81 | |
| 9 | 9 |  |  | 11,19 | 0,01 | nur Kunststoff | nicht-tragend | nicht-tragend | nicht-tragend | nicht-tragend |

Tabelle 1 (Fortsetzung)

**Tabelle 2**

| Materialnr. | Typ | Steifigkeitsklasse | Dichte [kg/m$^3$] | E1 [GPa] | E2 [GPa] | nu12 | nu21 | G12 [GPa] |
|---|---|---|---|---|---|---|---|---|
|  |  |  |  | Beipielkonfiguration - 50% FVG | | | | |
| 1 | CF | HT | 1500 | 116 | 5,4 | 0,28 | 0,01 | 2,3 |
| 2 | GF | S2 | 1870 | 44,7 | 6,4 | 0,29 | 0,04 | 2,4 |
| 3 | Kunststoff | PA6 | 1140 | 2,8 | 2,8 | 0,3 | 0,3 | 1,1 |

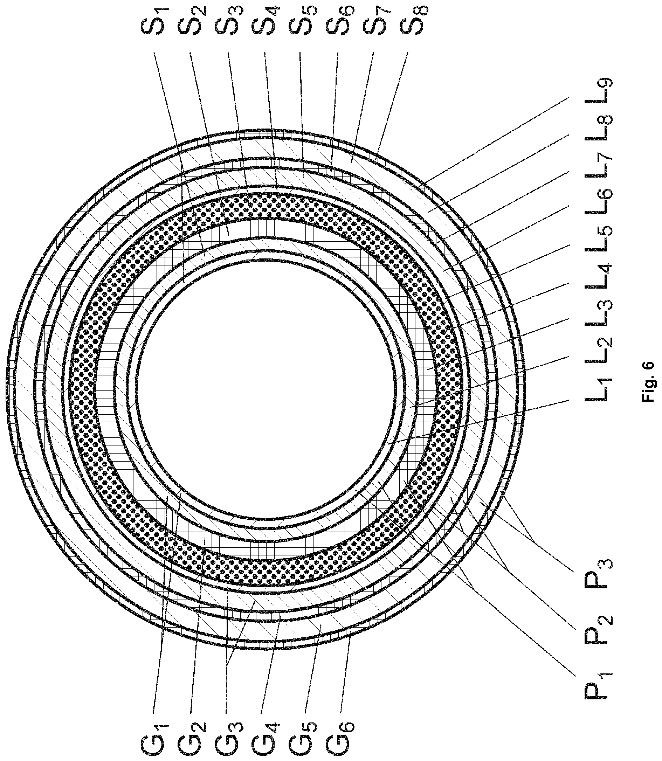

Das Ausführungsbeispiel 2 zeigt eine erfindungsgemäße Federdrahtanordnung bestehend aus gewickelten Textillagen und einem Hohlkern (Fig. 6). In Tabelle 3 und 4 werden die Anordnungskennwerte des Federdrahts und die Materialeigenschaften der verwendeten Materialien dargestellt. Aufgrund der technisch möglichen Ablage von gleichem Fasermaterial und gleichem Faserwinkel zur Stabachse bilden die Lagen 1 und 2 nur eine Schicht ($S_1$). Eine Faserablage mit gleichem Faserwinkeln und Fasermaterial in mehreren Lagen kann sich als vorteilhaft zeigen, wenn beispielsweise bei einem Ringwickelverfahren die Einzelrovings eine gleichmäßige Ablage bilden sollen und das Zusammenschieben bzw. das partielle Überlappen der Einzelrovings verhindert werden soll. Aus der Schicht $S_1$ ergibt sich die Gruppe $G_1$. Für diese druckbelastete Gruppe, die sich weit innenliegend am Federdraht befindet, wurden Kohlenstofffasern eingesetzt, da hier geringere Dehnungen auftreten und somit die Auslastungsgrenze des Materials nicht überschritten wird. Die Lage 4 besteht beim Ausführungsbeispiel 2 aus einer Kohlenstofffaserlage mit einem Faserwinkel von 0°. Hierbei handelt es sich um eine Schicht mit einem Faserwinkel außerhalb des Bereichs von 20° bis 70° oder des Bereichs von -20° bis -70°, die daher als nicht-tragend klassifiziert ist. Eine derartige Schicht hat eine vorteilhafte Auswirkung auf die Querlastunempfindlichkeit des als Helix um die Federachse gewickelten Federdrahts und ist daher zu einem gewissen Masseanteil sinnvoll. In diesem Fall beträgt der massebezogene Anteil nicht-tragender Schichten etwa 16% und damit weniger als 25% an der gesamten Federdrahtmasse. Die weiter außen liegenden druckbelasteten Lagen ($L_5$, $L_6$, $L_8$) werden aus Basaltfaserlagen gebildet. Die Basaltfaserlagen weisen erfindungsgemäß eine geringere Gruppensteifigkeit als die zugbelastete Lage mit der höchsten Gruppensteifigkeit (z.B. $L_9$) auf. Dabei ist die Gruppensteifigkeit von $L_5$ um 58% geringer und die der Lagen $L_6$ und $L_8$ um 62% geringer. Der massebezogene Anteil der druckbelasteten Faserlagen, die über eine geringere Gruppensteifigkeit verfügen liegt bei 82%, da nur die Massen der Lagen $L_1$ und $L_2$ dieses Kriterium nicht erfüllen. Gleichzeitig weist die zugbelastete Lage $L_9$ eine Gruppensteifigkeit von 139 GPa auf und liegt damit deutlich über den geforderten 60 GPa. Alle zugbelasteten Lagen werden hierbei aus Kohlenstofffasern gebildet. Das Ausführungsbeispiel 2 stellt eine bevorzugte Variante der erfindungsgemäßen Torsionsfeder dar. Alle Gruppen werden erfolgreich zu Paaren zugeordnet.

| Lage | Schicht | Gruppe | Paar | Klassifizierung | Belastung | Orientierung | Material | Lagenwand-stärke | Schichtwand-stärke | Schichtdurch-messer |
|---|---|---|---|---|---|---|---|---|---|---|
| Li | Sj | Gk | Pn | | | [Grad] | Mj | LWi [mm] | Wj [mm] | Dj [mm] |
| 1 | 1 | 1 | 1 | tragend | druck | -45 | 1 | 0,5 | 0,5 | 7,25 |
| 2 | | | | tragend | druck | -45 | 1 | 0,7 | 0,7 | 7,85 |
| 3 | 2 | 2 | | tragend | zug | 45 | 1 | 1,05 | 1,05 | 8,725 |
| 4 | 3 | | | nicht-tragend | | 0 | 1 | 1,35 | 1,35 | 9,925 |
| 5 | 4 | 3 | 2 | tragend | druck | -45 | 2 | 0,4 | 0,4 | 10,8 |
| 6 | 5 | | | tragend | druck | -40 | 2 | 1 | 1 | 11,5 |
| 7 | 6 | 4 | | tragend | zug | 45 | 1 | 0,5 | 0,5 | 12,25 |
| 8 | 7 | 5 | 3 | tragend | druck | -40 | 2 | 1,1 | 1,1 | 13,05 |
| 9 | 8 | 6 | | tragend | zug | 45 | 1 | 0,4 | 0,4 | 13,8 |

Tabelle 3

| Lage | Schicht | Gruppe | Paar | Querschnitts-fläche | Masse | FVG | Schichtsteifigkeit | Gruppensteifigkeit | Gruppendehn-steifigkeit | Gruppen-verhältnis |
|---|---|---|---|---|---|---|---|---|---|---|
| Li | Sj | Gk | Pn | [mm2] | [kg/m] | [%] | [GPa] | [GPa] | [kN] | GVn |
| 1 | 1 | 1 | 1 | 5,69 | 0,009 | 60% | 139,00 | 139,00 | 1991,27 | 1,00 |
| 2 | | | | 8,63 | 0,013 | 60% | 139,00 | | | |
| 3 | 2 | 2 | | 14,39 | 0,022 | 60% | 139,00 | 139,00 | 2000,27 | |
| 4 | 3 | | | 21,05 | 0,033 | 60% | nicht-tragend | nicht-tragend | nicht-tragend | nicht-tragend |
| 5 | 4 | 3 | 2 | 6,79 | 0,014 | 60% | 58,00 | 53,96 | 1340,96 | 1,00 |
| 6 | 5 | | | 18,06 | 0,038 | 60% | 52,45 | | | |
| 7 | 6 | 4 | | 9,62 | 0,015 | 60% | 139,00 | 139,00 | 1337,34 | |
| 8 | 7 | 5 | 3 | 22,55 | 0,047 | 60% | 52,45 | 52,45 | 1182,58 | 1,02 |
| 9 | 8 | 6 | | 8,67 | 0,013 | 60% | 139,00 | 139,00 | 1205,24 | |

Tabelle 3 (Fortsetzung)

**Tabelle 4**

| Materialnr. | Typ | Steifigkeitsklasse | Dichte | Beipielkonfiguration - 60% FVG | | | | |
|---|---|---|---|---|---|---|---|---|
| | | | | E 1 [GPa] | E2 [GPa] | nu12 | nu21 | G12 [GPa] |
| 1 | CF | HT | 1550 | 139 | 6,3 | 0,26 | 0,01 | 3,8 |
| 2 | BF | | 2100 | 58 | 8 | 0,28 | 0,04 | 3,5 |

## Bezugszeichenliste

$L_i$     Lage i (Zählindex i auf dem geschlossene Intervall der natürlichen Zahlen [1,l])
$LW_i$     Lagenwandstärke der Lage i
$S_j$     Schicht j (Zählindex j auf dem geschlossene Intervall der natürlichen Zahlen [1,J])
$\alpha_j$     Winkelorientierung zur Stabachse der Schicht $S_j$
1     Kern des Federdrahts (optional vorhanden)
$M_j$     Material der Schicht $S_j$
$D_j$     Schichtdurchmesser der Schicht $S_j$
$W_j$     Schichtwandstärke der Schicht $S_j$
$E_{S_j}$     Schichtsteifigkeit der Schicht $S_j$
$E_1$     Steifigkeit längs zur Faser des Materials $M_j$
$E_2$     Steifigkeit quer zur Faserrichtung des Materials $M_j$
$G_{12}$     Schubmodul des Materials $M_j$
$v_{12}$     Große Querkontraktionszahl des Materials $M_j$
$v_{21}$     Kleine Querkontraktionszahl des Materials $M_j$
$G_k$     Gruppe k (Zählindex k auf dem geschlossene Intervall der natürlichen Zahlen [1,K])
$A_{S_j}$     Querschnittsfläche der Schicht $S_j$
$E_{G_k}$     Gruppensteifigkeit der Gruppe $G_k$
$F_{G_k}$     Gruppendehnsteifigkeit der Gruppe $G_k$
$P_n$     Paar n (Zählindex n auf dem geschlossene Intervall der natürlichen Zahlen [1,N])

| | |
|---|---|
| $GV_n$ | Gruppenverhältnis n, berechnet aus einer zug- und druckbelasteten Gruppe |
| $D_a$ | Federdrahtaußendurchmesser |
| CF | Kohlenstofffaser |
| GF | Glasfaser |
| BF | Basaltfaser |
| S2 | Höhersteife Glasfaser |
| E | Glasfaser mit normaler Steifigkeit |
| HT | Kohlenstofffaser mit normaler Steifigkeit (High Tenacity) |

**Zitierte Nichtpatentliteratur**

Helmut Schürmann: Konstruieren mit Faser-Kunststoff-Verbunden, 1. Auflage, Springer Verlag 2005

**Patentansprüche**

1. Torsionsfeder als, Stab- oder Schraubenfeder aus einem Federdraht aus Faserverbundmaterial, aufweisend mehrere Schichten von Faserverstärkung, die mit einem Matrixmaterial getränkt sind, wobei jede Schicht nur Fasern, die zugbelastet sind oder nur Fasern, die druckbelastet sind, aufweist, **dadurch gekennzeichnet, dass** Gruppen von Schichten existieren, die zugbelastet sind und Gruppen von Schichten existieren, die druckbelastet sind und das mindestens eine druckbelastete Gruppe über eine geringere Gruppensteifigkeit, bezogen auf die zugbelastete Gruppe mit der höchsten Gruppensteifigkeit, verfügt.

2. Torsionsfeder nach Anspruch 1, **dadurch gekennzeichnet, dass** die Gruppensteifigkeit mindestens einer druckbelasteten Gruppe mindestens 10%, bevorzugt 20% und besonders bevorzugt 40%, geringer ist als die Gruppensteifigkeit der zugbelasteten Gruppe mit der höchsten Gruppensteifigkeit.

3. Torsionsfeder nach Anspruch 1, **dadurch gekennzeichnet, dass** mindestens eine innenliegende druckbelastete Gruppe, bezogen auf eine weiter außen liegende zugbelastete Gruppe, über eine geringere Gruppensteifigkeit verfügt..

4. Torsionsfeder nach Anspruch 1, **dadurch gekennzeichnet, dass** die zugbelastete Gruppe mit der höchsten Gruppensteifigkeit eine Gruppensteifigkeit von mindestens 60 GPa, bevorzugt von mindestens 80 GPa und besonders bevorzugt von mindestens 90 GPa besitzt.

5. Torsionsfeder nach Anspruch 1, **dadurch gekennzeichnet, dass** die zugbelastete Gruppe mit der höchsten Gruppensteifigkeit ausschließlich aus Kohlenstofffasern besteht.

6. Torsionsfeder nach Anspruch 1, **dadurch gekennzeichnet, dass** die zugbelasteten Gruppen zu einem Masseanteil von mindestens 50%, bevorzugt 75% und besonders bevorzugt 95% sowie ganz besonders bevorzugt ausschließlich aus Kohlenstofffasern bestehen.

7. Torsionsfeder nach Anspruch 1, **dadurch gekennzeichnet, dass** die zugbelasteten Gruppen zu einem Masseanteil von mindestens 50%, bevorzugt 75% und besonders bevorzugt 95% über eine um weniger als 50%, bevorzugt 30% und besonders bevorzugt 15%, bezogen auf die zugbelastete Gruppe mit der höchsten Gruppensteifigkeit, abweichende Gruppensteifigkeit verfügen.

8. Torsionsfeder nach Anspruch 1, **dadurch gekennzeichnet, dass** alle zugbelasteten Gruppen über eine um weniger als 50%, bevorzugt 30% und besonders bevorzugt 15%, bezogen auf die zugbelastete Gruppe mit der höchsten Gruppensteifigkeit, abweichende Gruppensteifigkeit verfügen und dass ganz besonders bevorzugt die Gruppensteifigkeit aller zugbelasteten Gruppen gleich groß ist.

9. Torsionsfeder nach Anspruch 1, **dadurch gekennzeichnet, dass** die druckbelasteten Gruppen zu einem Masseanteil von mindestens 20%, bevorzugt 50%, besonders bevorzugt 95% und ganz besonders bevorzugt alle druckbelasteten Gruppen, bezogen auf die zugbelastete Gruppe mit der höchsten Gruppensteifigkeit, über eine geringere Gruppensteifigkeit verfügen.

10. Torsionsfeder nach Anspruch 1, **dadurch gekennzeichnet, dass** die druckbelasteten Gruppen zu einem Masseanteil von mindestens 50%, bevorzugt 75% und besonders bevorzugt 95% über eine um weniger als 50%, bevorzugt 30% und besonders bevorzugt 15%, bezogen auf die druckbelastete Gruppe mit der höchsten und als gering klassifizierten Gruppensteifigkeit, abweichende Gruppensteifigkeit verfügen.

11. Torsionsfeder nach Anspruch 1, **dadurch gekennzeichnet, dass** alle druckbelasteten Gruppen über eine um weniger als 50%, bevorzugt 30% und besonders bevorzugt 15%, bezogen auf die druckbelastete Gruppe mit der höchsten und als gering klassifizierten Gruppensteifigkeit, abweichende Gruppensteifigkeit verfügen und dass ganz besonders bevorzugt die Gruppensteifigkeit aller druckbelasteten Gruppen gleich groß ist.

12. Torsionsfeder nach Anspruch 1, **dadurch gekennzeichnet, dass** die druckbelasteten Gruppen zu einem Masseanteil von mindestens 30%, bevorzugt 60% und besonders bevorzugt 80% und ganz besonders bevorzugt ausschließlich aus Glasfasern oder Basaltfasern bestehen.

13. Torsionsfeder nach Anspruch 1, **dadurch gekennzeichnet, dass** für die zug- und druckbelasteten Gruppen zur Verbesserung der Kosteneffizienz höchstens 6, bevorzugt höchstens 3 und besonders bevorzugt höchstens 2 verschiedene Grundfasertypen zum Einsatz kommen.

14. Torsionsfeder nach Anspruch 1, **dadurch gekennzeichnet, dass** mindestens ein Paar erfolgreich aus zwei Gruppen gebildet worden ist, welches ein Gruppenverhältnis im Bereich von 0,2 und 5, bevorzugt im Bereich von 0,5 und 2 und besonders bevorzugt im Bereich von 0,75 und 1,33, aufweist.

15. Torsionsfeder nach Anspruch 1, **dadurch gekennzeichnet, dass** ein auf den Federdraht, ohne Berücksichtigung der Kernmasse, massebezogener Anteil von mindestens 50%, bevorzugt mindestens 75% und besonders bevorzugt mindestens 95%, der Gruppen erfolgreich Paare gebildet hat.

16. Torsionsfeder nach Anspruch 1, **dadurch gekennzeichnet, dass** für Schichten mit einer Mischung aus Grundfasertypen jeder Grundfasertyp mindestens zu 10% (massebezogen) in der Mischfaserschicht vorliegt.

17. Torsionsfeder nach Anspruch 1, **dadurch gekennzeichnet, dass** in dem Federdraht, ohne Berücksichtigung der Kernmasse, höchstens ein massebezogener Anteil von 25%, bevorzugt von 15% und besonders bevorzugt von 5% in Form von als nicht-tragend klassifizierten Schichten vorliegt.

18. Torsionsfeder nach Anspruch 1, **dadurch gekennzeichnet, dass** der Federdraht einen kreisförmigen, ellipsoiden oder polygonalen Querschnitt aufweist.

19. Torsionsfeder nach Anspruch 1, **dadurch gekennzeichnet, dass** die Matrix der faserverstärkten Kunststofflagen aus einem gefüllten oder ungefüllten duroplastischen Kunststoff besteht.

20. Torsionsfeder nach Anspruch 1, **dadurch gekennzeichnet, dass** der Federstab einen Kern aufweist, der

   a. hohl ist, oder
   b. aus faserverstärktem Material mit unidirektionalen Fasern in Achsrichtung des Federstabes besteht oder
   c. aus Material ohne Faserverstärkung besteht.

21. Verfahren zur Auslegung einer Torsionsfeder, als Stab- oder Schraubenfeder aus einem mehrlagigen Faserverbundmaterial, **dadurch gekennzeichnet, dass** die folgenden Schritte ausgeführt werden:

   a. Vorauslegung der Feder
   b. Gruppen von Fasern aus aneinanderliegenden Schichten gleicher Belastungsrichtung bilden,
   c. rechnerische Ermittlung der Gruppensteifigkeiten jeder Gruppe,
   d. Anpassung der Gruppensteifigkeit der druckbelasteten Gruppen, so dass sie über eine geringere Gruppensteifigkeit, bezogen auf die zugbelastete Gruppe mit der höchsten Gruppensteifigkeit, verfügen,
   e. Bildung von Paaren von innen nach außen, derart, dass immer eine radial benachbarte zug- und eine druckbelastete Gruppe ein Paar bilden,
   f. Ermittlung des Gruppenverhältnisses als Quotient der Gruppendehnsteifigkeiten der zugbelasteten zu den druckbelasteten Gruppen eines Paares
   g. Minimierung der Schubspannungen zwischen benachbarter Gruppen durch Variation der Steifigkeitsverhältnisse mittels

- Variation der Schichtwandstärke und/oder
- Variation der Materialart und/oder
- Variation der Faserwinkel
bis das Gruppenverhältnis im Bereich von 0,2 bis 5 liegt.

h. Wiederholung der Schritte b. bis g. bis die angestrebte Tragfähigkeit bei gegebenem Federsteifigkeitsverlauf erreicht ist.

**22.** Verfahren nach Anspruch 21, **dadurch gekennzeichnet, dass** die Anpassung der Gruppensteifigkeit nach Schritt 1d. erfolgt, indem

a. das Fasermaterial gewechselt wird, und/oder
b. die Mischungen verschiedener Fasermaterialien gewechselt wird, und/oder
c. der Faserwinkel verändert wird.

**Claims**

**1.** Torsion spring as rod spring or helical spring made of a spring wire made of fiber-composite material, having a plurality of layers of fiber reinforcement which have been saturated with a matrix material, where each layer has only fibers that are tension-loaded or only fibers that are compression-loaded, **characterized in that** groups of layers exist that are tension-loaded and groups of layers exist that are compression-loaded, and the at least one compression-loaded group has a lower group stiffness than the tension-loaded group with the highest group stiffness.

**2.** Torsion spring according to Claim 1, **characterized in that** the group stiffness of at least one compression-loaded group is at least 10%, preferably 20%, and particularly preferably 40%, lower than the group stiffness of the tension-loaded group with the highest group stiffness.

**3.** Torsion spring according to Claim 1, **characterized in that** at least one internally situated compression-loaded group has a lower group stiffness than a tension-loaded group situated further outward.

**4.** Torsion spring according to Claim 1, **characterized in that** the group stiffness of the tension-loaded group with the highest group stiffness is at least 60 GPa, preferably at least 80 GPa, and particularly preferably at least 90 GPa.

**5.** Torsion spring according to Claim 1, **characterized in that** the tension-loaded group with the highest group stiffness is composed exclusively of carbon fibers.

**6.** Torsion spring according to Claim 1, **characterized in that** the tension-loaded groups are composed of a proportion by mass of at least 50%, preferably 75%, and particularly preferably 95%, and very particularly preferably exclusively, of carbon fibers.

**7.** Torsion spring according to Claim 1, **characterized in that** a proportion by mass of at least 50%, preferably 75%, and particularly preferably 95%, of the tension-loaded groups has a group stiffness differing by less than 50%, preferably 30%, and particularly preferably 15%, from that of the tension-loaded group with the highest group stiffness.

**8.** Torsion spring according to Claim 1, **characterized in that** all of the tension-loaded groups have a group stiffness differing by less than 50%, preferably 30%, and particularly preferably 15%, from that of the tension-loaded group with the highest group stiffness, and that very particularly preferably the group stiffness of all of the tension-loaded groups is identical.

**9.** Torsion spring according to Claim 1, **characterized in that** a proportion by mass of at least 20%, preferably 50%, particularly preferably 95%, and very particularly preferably 100%, of the compression-loaded groups has a lower group stiffness than the tension-loaded group with the highest group stiffness.

**10.** Torsion spring according to Claim 1, **characterized in that** a proportion by mass of at least 50%, preferably 75%, and particularly preferably 95%, of the compression-loaded groups has a group stiffness differing by less than 50%, preferably 30%, and particularly preferably 15%, from that of the compression-loaded group with the highest group stiffness classified as low.

11. Torsion spring according to Claim 1, **characterized in that** all of the compression-loaded groups have a group stiffness differing by less than 50%, preferably 30%, and particularly preferably 15%, from that of the compression-loaded group with the highest group stiffness classified as low, and that very particularly preferably the group stiffness of all of the compression-loaded groups is identical.

12. Torsion spring according to Claim 1, **characterized in that** the compression-loaded groups are composed of a proportion by mass of at least 30%, preferably 60%, and particularly preferably 80%, and very particularly preferably exclusively, of glass fibers or basalt fibers.

13. Torsion spring according to Claim 1, **characterized in that**, in order to improve cost efficiency, at most 6, preferably at most 3, and particularly preferably at most 2, different main fiber types are used for the tension- and compression-loaded groups.

14. Torsion spring according to Claim 1, **characterized in that** at least one pair successfully formed from two groups has a group ratio in the range from 0.2 and 5, preferably in the range from 0.5 and 2, and particularly preferably in the range from 0.75 and 1.33.

15. Torsion spring according to Claim 1, **characterized in that** the proportion by mass, based on the spring wire, ignoring the mass of the core, of the groups that have successfully formed pairs is at least 50%, preferably at least 75%, and particularly preferably at least 95%.

16. Torsion spring according to Claim 1, **characterized in that** in the case of layers with a mixture of main fiber types the quantity of each main fiber type present in the mixed fiber layer is at least 10% (by mass).

17. Torsion spring according to Claim 1, **characterized in that** the proportion by mass of layers classified as non-loadbearing in the spring wire, ignoring the mass of the core, is at most 25%, preferably 15%, and particularly preferably 5%.

18. Torsion spring according to Claim 1, **characterized in that** the cross section of the spring wire is circular, elliptical, or polygonal.

19. Torsion spring according to Claim 1, **characterized in that** the matrix of the fiber-reinforced plastics plies is composed of a filled or unfilled thermoset plastic.

20. Torsion spring according to Claim 1, **characterized in that** the spring rod has a core which

    a. is hollow, or
    b. is composed of fiber-reinforced material with unidirectional fibers in the axial direction of the spring rod, or
    c. is composed of material without fiber reinforcement.

21. Method for the design of a torsion spring in the form of rod spring or helical spring made of a multiple-ply fiber-composite material, **characterized in that** the following steps are carried out:

    a. pre-design of the spring,
    b. formation of groups of fibers made of layers in contact with one another having identical loading direction,
    c. mathematical determination of the group stiffness values of each group,
    d. appropriate adjustment of the group stiffness of the compression-loaded groups in such a way that they have lower group stiffness than the tension-loaded group with the highest group stiffness,
    e. formation of pairs from the inside toward the outside in such a way that a radially adjacent tension- and compression-loaded group always form a pair,
    f. determination of the group ratio as quotient calculated as the relationship between the group extensional stiffness values of the tension-loaded and the compression-loaded groups of a pair,
    g. minimization of the shear stresses between adjacent groups via variation of the stiffness ratios by means of

        - variation of the layer wall thickness and/or

- variation of the type of material and/or
- variation of the fiber angle
until the group ratio is in the range from 0.2 to 5,

h. repetition of the steps b. to g. until the desired loadbearing capability has been achieved with a given spring stiffness profile.

**22.** Method according to Claim 21, **characterized in that** the appropriate adjustment of the group stiffness in step 1d. is achieved **in that**

a. the fiber material is changed, and/or
b. the mixtures of various fiber materials are changed, and/or
c. the fiber angle is altered.

## Revendications

**1.** Ressort de torsion sous forme de ressort en barre ou de ressort hélicoïdal en fil à ressort constitué par un matériau composite fibreux, présentant plusieurs couches de renforcement fibreux qui sont imprégnées d'un matériau de matrice, chaque couche ne présentant que des fibres sollicitées en traction ou que des fibres sollicitées en pression, **caractérisé en ce qu'**il existe des groupes de couches qui sont sollicités en traction et des groupes de couches qui sont sollicités en pression et au moins un groupe sollicité en pression dispose d'une rigidité de groupe inférieure, par rapport au groupe sollicité en traction présentant la rigidité de groupe la plus élevée.

**2.** Ressort de torsion selon la revendication 1, **caractérisé en ce que** la rigidité de groupe d'au moins un groupe sollicité en pression est inférieure d'au moins 10%, de préférence de 20% et de manière particulièrement préférée de 40% à la rigidité de groupe du groupe sollicité en traction présentant la rigidité de groupe la plus élevée.

**3.** Ressort de torsion selon la revendication 1, **caractérisé en ce qu'**au moins un groupe interne sollicité en pression, par rapport à un groupe sollicité en traction plus externe, dispose d'une rigidité de groupe inférieure.

**4.** Ressort de torsion selon la revendication 1, **caractérisé en ce que** le groupe sollicité en traction présentant la rigidité de groupe la plus élevée présente une rigidité de groupe d'au moins 60 GPa, de préférence d'au moins 80 GPa et de manière particulièrement préférée d'au moins 90 GPa.

**5.** Ressort de torsion selon la revendication 1, **caractérisé en ce que** le groupe sollicité en traction présentant la rigidité de groupe la plus élevée est constitué exclusivement de fibres de carbone.

**6.** Ressort de torsion selon la revendication 1, **caractérisé en ce que** les groupes sollicités en traction sont constitués à raison d'une proportion massique d'au moins 50%, de préférence de 75%, de manière particulièrement préférée de 95% ainsi que de manière tout particulièrement préférée exclusivement, de fibres de carbone.

**7.** Ressort de torsion selon la revendication 1, **caractérisé en ce que** les groupes sollicités en traction disposent, à raison de proportion massique d'au moins 50%, de préférence de 75% et de manière particulièrement préférée de 95%, d'une rigidité de groupe s'écartant de moins de 50%, de préférence de 30% et de manière particulièrement préférée de 15% par rapport à celle du groupe sollicité en traction présentant la rigidité de groupe la plus élevée.

**8.** Ressort de torsion selon la revendication 1, **caractérisé en ce que** tous les groupes sollicités en traction disposent d'une rigidité de groupe s'écartant de moins de 50%, de préférence de 30% et de manière particulièrement préférée de 15% par rapport à celle du groupe sollicité en traction présentant la rigidité de groupe la plus élevée et **en ce que** de manière tout particulièrement préférée la rigidité de groupe de tous les groupes sollicités en traction est identique.

**9.** Ressort de torsion selon la revendication 1, **caractérisé en ce que** les groupes sollicités en pression disposent, à raison d'une proportion massique d'au moins 20%, de préférence de 50%, de manière particulièrement préférée de 95% et de manière tout particulièrement préférée tous les groupes sollicités en pression, d'une rigidité de groupe inférieure par rapport à celle du groupe sollicité en traction présentant la rigidité de groupe la plus élevée.

**10.** Ressort de torsion selon la revendication 1, **caractérisé en ce que** les groupes sollicités en pression disposent, à raison d'une proportion massique d'au moins 50%, de préférence de 75%, de manière particulièrement préférée de 95%, d'une rigidité de groupe s'écartant de moins de 50%, de préférence de 30% et de manière particulièrement préférée de 15% par rapport à celle du groupe sollicité en pression présentant la rigidité de groupe la plus élevée et à celle classifiée comme faible.

**11.** Ressort de torsion selon la revendication 1, **caractérisé en ce que** tous les groupes sollicités en pression disposent d'une rigidité de groupe s'écartant de moins de 50%, de préférence de 30% et de manière particulièrement préférée de 15% par rapport à celle du groupe sollicité en pression présentant la rigidité de groupe la plus élevée et à celle classifiée comme faible et **en ce que** de manière tout particulièrement préférée la rigidité de groupe de tous les groupes sollicités en pression est identique.

**12.** Ressort de torsion selon la revendication 1, **caractérisé en ce que** les groupes sollicités en pression sont constitués, à raison d'une proportion massique d'au moins 30%, de préférence de 60%, de manière particulièrement préférée de 80% et de manière tout particulièrement préférée exclusivement de fibres de verre ou de fibres de basalte.

**13.** Ressort de torsion selon la revendication 1, **caractérisé en ce qu'**on utilise, pour les groupes sollicités en traction et en pression, pour améliorer l'efficacité du coût, au plus 6, de préférence au plus 3 et de manière particulièrement préférée au plus 2 types différents de fibres de base.

**14.** Ressort de torsion selon la revendication 1, **caractérisé en ce qu'**au moins une paire a été formée avec succès à partir de deux groupes, qui présente un rapport de groupes dans la plage de 0,2 et 5, de préférence dans la plage de 0,5 et 2 et de manière particulièrement préférée dans la plage de 0,75 et 1,33.

**15.** Ressort de torsion selon la revendication 1, **caractérisé en ce qu'**une proportion massique se rapportant au fil à ressort, sans tenir compte de la masse de noyau, d'au moins 50%, de préférence d'au moins 75% et de manière particulièrement préférée d'au moins 95% des groupes a formé des paires avec succès.

**16.** Ressort de torsion selon la revendication 1, **caractérisé en ce que**, pour des couches présentant un mélange de types de fibres de base, chaque type de fibre de base se trouve à raison d'au moins 10% (par rapport à la masse) dans la couche de fibres mixtes.

**17.** Ressort de torsion selon la revendication 1, **caractérisé en ce que**, dans le fil à ressort, sans tenir compte de la masse de noyau, on trouve au plus une proportion massique de 25%, de préférence de 15% et de manière particulièrement préférée de 5%, sous forme de couches classifiées comme non porteuses.

**18.** Ressort de torsion selon la revendication 1, **caractérisé en ce que** le fil à ressort présente une section transversale circulaire, ellipsoïde ou polygonale.

**19.** Ressort de torsion selon la revendication 1, **caractérisé en ce que** la matrice des couches en matériau synthétique renforcées par des fibres de verre est constituée par un matériau synthétique thermodurcissable chargé ou non chargé.

**20.** Ressort de torsion selon la revendication 1, **caractérisé en ce que** la barre de torsion présente un noyau qui

a. est creux ou
b. est constitué par un matériau renforcé par des fibres, présentant des fibres unidirectionnelles dans la direction axiale de la barre de torsion ou
c. est constitué par un matériau sans renforcement fibreux.

**21.** Procédé pour étaler un ressort de torsion sous forme d'un ressort en barre ou d'un ressort hélicoïdal, en matériau composite fibreux à plusieurs couches, **caractérisé en ce que** les étapes suivantes sont exécutées :

a. étalement préalable des ressorts
b. formation de groupes de fibres constitués par des couches adjacentes de même sens de sollicitation,
c. détermination par calcul des rigidités de groupe de chaque groupe,
d. adaptation de la rigidité de groupe des groupes sollicités en pression de telle sorte qu'ils disposent d'une rigidité de groupe inférieure, par rapport au groupe sollicité en traction présentant la rigidité de groupe la plus élevée,

e. formation de paires de l'intérieur vers l'extérieur de manière telle qu'un groupe sollicité en traction et un groupe sollicité en pression radialement adjacents forment toujours une paire,

f. détermination des rapports de groupes comme quotient des rigidités à l'allongement de groupe des groupes sollicités en traction à celles des groupes sollicités en pression d'une paire,

g. réduction au minimum des contraintes de cisaillement entre des groupes adjacents par variation des rapports de rigidité par

    - variation de l'épaisseur de paroi de couche et/ou
    - variation du type de matériau et/ou
    - variation de l'angle des fibres jusqu'à ce que le rapport des groupes se situe dans la plage de 0,2 à 5,

h. répétition des étapes b. à g. jusqu'à ce que la capacité porteuse visée à l'évolution de rigidité de ressort donnée soit atteinte.

**22.** Procédé selon la revendication 21, **caractérisé en ce que** l'adaptation de la rigidité de groupe selon l'étape 1d a lieu **en ce que**

    a. le matériau fibreux est changé et/ou
    b. les mélanges de différents matériaux fibreux sont changés et/ou
    c. l'angle des fibres est modifié.

Fig. 1a          Fig. 1b

Fig. 2

S$_1$ , M$_1$, W$_1$

S$_j$, M$_j$, W$_j$

S$_J$, M$_J$, W$_J$

1

$S_1 , M_1, W_1$

$S_j, M_j, W_j$

$S_j, M_j, W_j$

1

Fig. 3

EP 3 155 287 B1

$S_1, M_1, W_1$

$S_j, M_j, W_j$

$S_J, M_J, W_J$

Fig. 4

21

Fig. 5

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0637700 A
- US 5603490 A
- WO 2014014481 A1
- FR 2859735 A1
- EP 0637700 A2
- US 5685525 A

**In der Beschreibung aufgeführte Nicht-Patentliteratur**

- **HELMUT SCHÜRMANN.** Konstruieren mit Faser-Kunststoff-Verbunden. Springer Verlag, 2005